(19) Europäisches Patentamt
European Patent Office
Office européen des brevets

(11) Publication number: **0 138 445 B1**

(12) **EUROPEAN PATENT SPECIFICATION**

(45) Date of publication of patent specification: **22.07.92**

(51) Int. Cl.$^5$: **G06K 9/34**

(21) Application number: **84306526.9**

(22) Date of filing: **25.09.84**

# (54) Method and apparatus for segmenting character images.

(30) Priority: **29.09.83 US 537280**

(43) Date of publication of application:
**24.04.85 Bulletin 85/17**

(45) Publication of the grant of the patent:
**22.07.92 Bulletin 92/30**

(84) Designated Contracting States:
**CH DE FR GB IT LI NL**

(56) References cited:
**US-A- 3 526 876**
**US-A- 4 013 999**
**US-A- 4 045 773**

**PATENT ABSTRACTS OF JAPAN, vol. 7, no. 87 (P-190)[1232], 12th April 1983; & JP-A-58 14 281 (TOKYO SHIBAURA DENKI K.K.) 27-01-1983**

(73) Proprietor: **International Business Machines Corporation**
**Old Orchard Road**
**Armonk, N.Y. 10504(US)**

(72) Inventor: **Bednar, Gregory Martin**
**2640 Brook Hollow Road**
**Matthews North Carolina 2-105(US)**
Inventor: **Fryer, George Bernard**
**5500 Foxcrest Drive**
**Charlotte North Carolina 28212(US)**

(74) Representative: **Atchley, Martin John Waldegrave**
**IBM United Kingdom Limited Intellectual Property Department Hursley Park**
**Winchester Hampshire SO21 2JN(GB)**

**EP 0 138 445 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the field of character recognition, and in particular to the segmentation into individual character images of a coded representation of a line of characters printed on a document so that individual characters may be recognised or identified.

Generally, individual characters are successively written along a horizontal line on a document. Further horizontal lines of characters are written as necessary. During the subsequent reading of the characters using OCR apparatus, assuming that the characters are read horizontally, the vertical orientation parameter of the OCR process is generally used to find the lines of characters on the document and to distinguish between adjacent lines in the vertical direction. Distinguishing between adjacent characters in the line in the horizontal direction is generally referred to as segmentation. Segmentation is the process of dividing a horizontal string of characters written along a line on a document into separate or discrete characters, e.g. dividing a word into its individual letters.

In operation the OCR apparatus reads all the characters in a line generating coded signals representing the line or characters. The segmentation process allows these coded signals to be broken up into individual coded images for each of the characters in the line. Subsequently each coded character image is binarised and stored as a binary video data pattern which ideally contains only the data associated with the character to be recognised. The data representing each character is typically coded as picture elements (PELS) that are either black or white, which respectively represent the presence of a character portion or the presence of background (i.e. the absence of a character portion) at a particular location in the area of the document in which the character is written.

Once the character is recognised, a coded representation (usually a hexadecimal byte) of that character can be transmitted to data processing equipment.

In the past, methods for segmenting characters were expensive, complex, slow and hardware intensive because they were designed to accommodate the most difficult case. As a result, they were not compatible with modern day microprocessors. For instance, an early segmentation technique is shown in United States Patent A-3,526,876. In this patent, character pitch is determined from pairs of adjacent characters, and the pitch data is used to partition each character space into areas. Each successive area is scanned vertically, and logical tests are made in each area to determine when the character has been completely scanned. Character height and width are logically analysed to segment the characters. Pitch is used to segment the characters only if no other segmentation point is located.

United States Patent A-4,045,773 discloses another early segmentation technique that adjusts the segmentation point depending upon whether or not the scanned character is within a character frame. The rows of horizontally extending characters are scanned vertically after the interval of the lines separating the character frames has been provided. The scanned pattern portion is projected and tested for the presence of a logical 1, which represents a dark spot, to determine whether or not the scanned pattern portion is a blank. The start and end points of a character are determined, and the centre of the character is calculated using the start and end points. If the character is too small, scanning continues beyond the first start and end points to determine if the character comprises two or more sub-patterns, or if it should be rejected as noise. Having calculated the centre of the sub-pattern or character, the location of the centre is compared to the location of the character frame. All characters or patterns or sub-patterns having a centre within the character frame are segmented as a single character pattern.

While prior art segmentation techniques are satisfactory from a functional standpoint, they are too complex for low-cost implementation in that they generally require special purpose hardware.

Patent Abstracts of Japan, Vol 7, No 87 (P-19O) [1232], 12 April 1983 describes a method of segmenting into individual character images a coded representation of a line of characters printed on a document. The method comprises scanning along the line of characters and generating data signals representing images of the characters and generating from the data signals a line profile segment for each character scanned, each profile segment extending in a line parallel to the direction of scanning and representing the size of the respective character in the direction of scanning. The method described uses the profile segments to establish in the data signals segmentation points defining the boundaries between adjacent character images.

The object of the present invention is to provide an improved apparatus and method for segmenting into individual character images a coded representation of a line of characters printed on a document.

The invention relates to apparatus for segmenting into individual character images a coded representation of a line of characters printed on a document comprising:

a scanner for scanning along the line of characters and for generating data signals representing images of the characters,

a profile generator responsive to the data signals for generating a line profile segment for each character scanned, each profile segment extending in a line parallel to the direction of scanning and representing the size of a respective character in the direction of scanning,

position determining means for determining the position of the centre of each of the profile segments,

a linear function generator for generating a linear function dependent upon the position of the centre of at least one of the profile segments,

and analysing means for utilising the linear function to establish in the data signals segmentation points defining boundaries between adjacent character images.

According to the invention the apparatus is characterised in that the linear function generator generates a linear function which can be represented on a graph having an X-axis and a Y-axis by a straight line having an equation:

$$c_i = ey_i + d$$

where

- $c_i$ = distance along the X-axis of the centre of the ith preferred character location,
- e = slope of the line corresponding to the pitch of the characters,
- $y_i$ = distance along the Y-axis of the representation of the ith preferred character location, and
- d = distance along the X-axis of the intercept of the line with the X-axis,

by utilising a least squares regression technique involving the establishment of the minimum value of the expression:

$$\sum_{i=1}^{m} \left[ x_i - (ey_i + d) \right]^2$$

where

- m = total number of characters for which profile segments have been generated,
- $x_i$ = distance along the X-axis of the centre of the profile segment of the ith character, and e, y and d have the values defined above,

by suitably selecting the values of d and e,

and in that the analysing means utilises the linear function to establish the positions of the centres of the preferred character locations and utilises the positions of the centres of preferred character locations to establish the positions of segmentation points.

The invention also relates to a method of segmenting into individual character images a coded representation of a line of characters printed on a document comprising:

scanning along the line of characters and generating data signals representing images of the characters,

generating from the data signals a line profile segment for each character scanned, each profile segment extending in a line parallel to the direction of scanning and representing the size of a respective character in said direction of scanning,

determining the position of the centre of each of the profile segments,

generating a linear function dependent upon the position of the centre of at least one of the profile segments,

and utilising the linear function to establish in the data signals segmentation points defining the boundaries between adjacent character images.

According to the invention the method is characterised by generating a linear function which can be represented on a graph having an X-axis and a Y-axis by a straight line having an equation:

$$c_i = ey_i + d$$

where

- $c_i$ = distance along the X-axis of the centre of the ith preferred character location,
- e = slope of the line corresponding to the pitch of the characters,
- $y_i$ = distance along the Y-axis of the representation of the ith preferred character location, and
- d = distance along the X-axis of the intercept of the line with the X-axis,

by utilising a least squares regression technique involving the establishment of the minimum value of the expression:

$$\sum_{i=1}^{m} \left[ x_i - (ey_i + d) \right]^2$$

where

- m = total number of characters for which profile segments have been generated,

$x_i$ = distance along the X-axis of the centre of the profile segment of the ith character,

and e, y and d have the values defined above, by suitably selecting the values of d and e,

and utilising the linear function to establish the positions of the centres of the preferred character locations and utilising the positions of the centres of preferred character locations to establish the positions of segmentation points.

The present invention is well suited to implementation using a general purpose microprocessor because the calculations can be accomplished with logical and arithmetic functions. By utilising profile segments of the line of characters to determine the best estimate of the segmentation points within the coded representation of the line of characters, the present invention enables overlapped characters, connected characters, underscored characters, broken characters and blank character spaces all to be segmented successfully. According to one embodiment the present invention uses validation steps, such as a segmentation recognition retry feature which utilises feedback from the recognition of the specific characters, in order to enhance segmentation accuracy.

In implementing the invention each line of characters on a document is scanned in a series of parallel scan lines extending along the line of characters to generate successive sets of data signals representing the characters, including blank spaces, overlapped characters, etc. A set of data signals is generated for each scan line. The set of data signals for each scan line represents binary picture elements PELS) forming the characters. The corresponding portions of the sets of data signals are logically ORed resulting in the generation of a horizontal binary character line profile segment in which a continuous series of bits of one binary state (binary bit "1") represents a continuous series or black picture elements (PELS), and a continuous series or the other binary state (binary bit "0") represents a series of white PELS. The series of black bits corresponds to character width in the direction of scanning, while the series or white bits corresponds to gaps between characters, or to the separation between portions of a broken or multi-part character. A profile segment is a continuous series of black PELS that corresponds to one or more characters or a discrete part of a multipart character within the character line profile.

The position of the centre of each of the profile segments is determined and is used in a linear function to establish the positions of segmentation points defining the boundaries between adjacent character images in the sets of data representing the line of characters.

The linear function algorithm, which may be implemented in software for use by a general purpose microprocessor, can be in either of two forms. If the pitch of the characters, which is defined as the distance between corresponding portions of adjacent characters, is known and the characters are believed to be printed reasonably accurately in preferred character locations then the linear function can be obtained by using the pitch of the characters and the position of the centre of one of the profile segments. On the other hand, if the characters are not believed to be printed accurately in preferred character locations, the linear function is obtained in accordance with the present invention as claimed by implementing a least squares regression technique using the positions of the centres of all the profile segments. This well known statistical algorithm fits a straight line to a set of observed points (i.e. the centre of the profile segments plotted on a graph of preferred character position versus distance along the scan line) in such a way that the sum of the squares of the distances of the observed points to the line is at a minimum. This least-squares fit of the best straight line to the observed points permits one to determine the slope of the line and, thus, the character pitch.

In order that the invention may be more readily understood an embodiment of the invention will now be described with reference to the accompanying drawings, in which:

Figure 1 is a schematic drawing showing part of an optical character recognition system used to scan a line of characters on a document,

Figure 2 is a schematic drawing representing two exemplary scan lines scanning the characters using the optical character recognition system of Figure 1 and showing the horizontal line character profile generated for the line of characters,

Figure 3 illustrates a set of characters of predetermined pitch and their profiles superimposed on a graph used to calculate the position of the centre of each preferred character location and the positions of segmentation points between adjacent preferred character locations, and

Figure 4 is similar to Figure 3, and illustrates the use of a least squares linear regression technique for determining the position of the centre of each preferred character location and the positions of segmentation points bewteen adjacent preferred character locations.

Referring to Figure 1, an optical scanner 10 of known construction and operation scans a document 11 having one or more horizontal lines of characters 12. The characters are scanned in a direction generally parallel to the direction in which they extend across the document (i.e., horizontally). The scanner typically examines the entire length of the document by moving either the document or the scanner mechanism, and examines the entire width of the document by selecting a field of view of appropriate width. The document is provided with a series of contiguous horizontal boxes 13 each of which defines a preferred character location. The boxes have a predetermined pitch and delineate areas into which characters will preferably be located, in a one-to-one correspondence, to assist in the proper spacing of handwritten characters.

Referring to Figure 2, the optical scanner 10 scans each line of characters in a series of vertically spaced scan lines and generates information representative of the characters. Each character is considered to be made up from a plurality of picture elements (PELs) arranged in horizontal rows and vertical columns. Each row contains a large number of PELs, several hundred or more. Each scan line scans along a row of PELs and generates a binary data bit for each PEL. Each PEL is either dark or light depending on whether it corresponds to a dark or a light portion of a character and the binary data bit representing each PEL will have a value indicating whether the PEL is dark or light. For each scan line there is therefore generated a set of binary data bits representing the PELs scanned by the scan line.

More specifically, and by way of example, when scanning along the scan line bearing the reference 120 in Figure 2, the scanner generates a set of binary data signals, in which a logical 0 (zero) represents a blank or background space 20 and a logical 1 represents the presence of a portion of a character on the scan line, shown as a thick dot 21 on the scan line. The lines defining the boxes 13 are invisible to the scanner and thus are represented by a logical 0 unless a portion of a character coincides with one of these box defining lines, as where the tail of the numeral 5 crosses into a box at reference numeral 22. The scanner makes successive horizontal scans along the length of the document, and for each scan line is generated a corresponding set of binary data signals which is likely to be different for each scan line. This is illustrated by a comparison of the scan line 120, with the scan line 180. It will be seen that each of these scan lines scans across portions of characters in different horizontal positions and therefore the sets of binary data signals generated for these scan lines are different.

The bits of each set of binary data signals are logically combined to generate a horizontal character line profile for the line of scanned characters. The bits in each set corresponding to each vertical column of PELs are logically combined using an OR function as described in more detail below. The horizontal character line profile is representative of the widths of the characters in the line and the spacing between the characters.

In operation, the optical scanner 10 generates information representative of the characters on the document 11, and this information is a series of sets of binary data signals representing the dark and light PELs forming the characters. The scanner makes successive horizontal scans and for each scan it generates logical zeros (0's) to represent a light PEL or background space, and logical ones (1's) to represent a dark PEL or the presence of a portion of a character on the scan line. The horizontal character line profile is generated by sequentially supplying the sets of data signals corresponding to the horizontal scan lines for a line of characters to a register having a set of storage positions each corresponding to a respective one of the PELs forming the scanned character. Beginning with a clear register (i.e. all logical zeros), sets of binary data signals are effectively logically combined using an OR function by successively providing them to the register. For each logical 1 in a set of data signals representing a dark PEL, the corresponding register storage position is set to a logical 1, and remains a logical 1 until the register position is cleared after the entire line of characters has been scanned. For those PELs which are blank representing only a background space, the corresponding register storage position will remain set to a logical zero. Having been supplied with all of the sets of data signals, the register will reflect which vertical columns of PELs represent portions of characters and this information is reflected in the horizontal character line profile.

The resulting horizontal character line profile, such as the one illustrated at reference letter P for FIG. 2, appears as a series of black segments (logical 1's) separated by gaps of white (logical 0's). The black segments 23 correspond to the horizontal locations of the scanned characters, and the white gaps 24 correspond to the separations between adjacent scanned characters. Although the profile has been described as horizontal, it is to be understood that the profile is parallel to the direction of reading, and thus may be oriented vertically for an alphabet that is read vertically.

For each horizontal line of characters, the corresponding horizontal character line profile is tested for one profile segment 23 that meets predetermined maximum and minimum width criteria. Profile segments that are too narrow, such as a profile of a character representing the number 1, are rejected because the location of the character within the preferred character location (i.e. box 13) may vary substantially. Alternatively such a narrow profile may represent noise. Profile segments that are too wide, such as the profile segment of a carelessly drawn character representing the number 5 where the top line extends too far to the right, are rejected because the character may extend outside the confines of the preferred character location. Profile segments falling within the predetermined range, such as the profile segment of a character representing the number 3, are more likely to represent a character centrally located within the preferred character location. Specifically, if there are 200 PELS per inch and the character spacing or density is 10 characters per inch, the preferred width range for a horizontal profile segment is 12 to 20 PELS. This preferred width range changes with changes in character spacing. For example, if the character spacing or density is 12 characters per inch, the preferred width range is 10 to 17 PELS. Experimental testing has shown that a valid profile segment usually is found within the first few character locations in a line, and often in the first character location of the line.

Having selected a qualifying horizontal profile segment, its centre is located. This is assumed to correspond to the centre of the character and the centre of the corresponding preferred character location.

Figure 3 illustrates how the position of the centre of one character, as determined from the horizontal character profile, can be used to determine the centres of preferred character locations in the same line and the segmentation points separating adjacent preferred characters locations given that the pitch of the characters in the line is known. The pitch is defined as the distance between the corresponding portions (for example the centres) of adjacent characters.

Figure 3 shows part of a document 11 on which is printed a row of characters 12 located in preferred character locations. For each character a profile segment P is formed by the method described above. The position of the centre of each profile segment is determined.

Two axes for a graph as shown are drawn, the vertical or Y-axis represents the preferred locations of the characters in the line and the horizontal or X-axis represents the position in the line of the centre of each preferred location for each character. The preferred character locations are assumed to be spaced equally and therefore the preferred locations of the characters are represented by equally spaced points on the Y-axis. A line L1 can be drawn on the graph representing the positions of the centres C of the preferred locations for the characters. The equation for this line is:

$$c_i = an_i + b$$

where

$c_i$ = distance along the X-axis of the centre $C_i$ of the ith preferred character location (i = 1, 2, 3...),

a = pitch of the characters,

$n_i$ = distance along the Y-axis of the representation of the ith preferred character location, and

b = distance along the X-axis of the intercept of the line with the X-axis.

The intercept of the Y-axis and the X-axis corresponds to a datum point on the document 11 from which measurements are made in order to define the position of the centre of each preferred character location.

If the position relative to the datum point of the centre of a preferred character location, for example the centre $C_2$ of the second preferred character location, has been determined by using the horizontal character line profile as described above, this position will lie on the line satisfying the above equation. Since the pitch of the characters is known, the slope of the line is known. Given one point on the line and the slope of the line enables the line L1 to be drawn on the graph.

The position of the centre of each of the other preferred character locations can be found by reading off the position on the line relative to the X-axis for each preferred character location on the Y-axis. For example, the position of the centre $C_4$ can be found by determining the point on the line L1 corresponding to the fourth preferred character location on the Y-axis and then determining the position of the corresponding point $C_4$ on the X-axis.

The distance a represents the distance between the centres of adjacent preferred character locations and all preferred character locations are the same width. Therefore the distance between each preferred character location centre and the line defining the boundary between adjacent preferred locations (the segmentation point) is a/2.

Another line L2 representing the positions of the segmentation points between adjacent character locations can be drawn on the graph of Figure 3. The equation of this line is:

$$s_i = an_i + (b - a/2)$$

where

$s_i$ = distance along the X-axis of the segmentation point $S_i$ between the ith and the (i - 1)th character location, and a, b and n have the values as detailed above.

This line 12 extends parallel to line L1 and intercepts the X-axis at a point a distance a/2 towards the intercept of the X-axis and the Y-axis from the point of interception of line L1 as shown. The line L2 represents the positions of the boundaries between adjacent preferred character locations and these correspond to the segmentation points $S_1$, $S_2$... between adjacent characters. For example, the position of the segmentation point $S_2$ between characters 1 and 2 is obtained by determining the point on the line L2 corresponding to the character location 2 as represented on the Y-axis and determining the corresponding point $S_2$ on the X-axis.

Having obtained the positions of the segmentation points $S_1$, $S_2$... this information can be used by the OCR system to assist in recognising the characters.

If the document is not provided with the boxes 13 and the positions of the preferred character locations are not known the character pitch will not be known and the centres of the profile segments of the characters are considered to be only estimated positions of the centres of the preferred character locations. In these circumstances it is not possible to draw the line L1. In this situation the positions of the centres of the profile segments of the characters are used with a least squares regression method to determine the true positions of the centres of the preferred character locations. The method of least squares regression is a well known statistical procedure and is described in "Probability and Statistics for Engineers", by Irwin Miller and John Freund, published 1965 by Prentice-Hall, in Chapter 12 "Curve Fitting" at Section 12.1 "The Method of Least Squares" in pages 226-231.

This procedure is illustrated in Figure 4 which shows a part of a document 11 on which is printed a row of characters 12. The characters are assumed not to be accurately positioned in preferred character locations. For each character a profile segment P is formed by the method described above. The position of the centre of each profile segment is determined.

Figure 4 also shows a graph in which the X-axis represents distance along the line of characters from a datum point represented by the intersection of the X-axis with the Y-axis. The Y-axis represents the relative positions of the preferred character locations. The preferred character locations are assumed to be spaced apart equally and are represented by equally spaced points on the Y-axis but the actual positions of these locations are not known.

The position of the centre PC of each profile segment is determined and a corresponding point entered on the graph. The positions of the centres $PC_1$, $PC_2$, $PC_3$, $PC_4$ of the profile segments of the four characters are illustrated. The distances along the X-axis of the positions of these centres are defined as $x_1$, $x_2$, $x_3$, $x_4$ respectively. The positions of these centres are considered to be estimated positions of the true centres C of the preferred character locations.

By using the method of least squares regression it is possible to define the equation of a line L3 which when drawn on the graph represents as closely as possible the position of the true centre C of the preferred character location for each character given the position of the centre PC of the profile segment for each character. From this line L3 can be derived the positions of the segmentation points S between adjacent character locations.

The equation of line L3 is:

$$c_i = ey_i + d$$

where

- $c_i$ = distance along the X-axis of the true centre $C_i$ of the ith preferred character location,
- $y_i$ = distance along the Y-axis of the representation of the ith preferred character location,
- e = slope of the line corresponding to the pitch of the characters, and
- d = distance along the X-axis of the intercept of the line with the X-axis

In accordance with the method of least squares regression an expression representing the sum of the squares of the distances of the centres of the profile segments from this line L3 is made a minimum. The expression is:

$$\sum_{i=1}^{m} \left[ x_i - (ey_i + d) \right]^2$$

where

- m = total number of characters for which profile segments have been generated,
- $x_i$ = distance along the X-axis of the centre $PC_i$ of the profile segment of the ith character, and e, $y_i$ and d have the values defined above.

The expression is made a minimum by varying the values of d and e and performing suitable mathematical calculations for all values of i and the values of d and e which result in this minimum value are noted. Once these values of d and e have been by determined the line L3 can be drawn on the graph. From this line the true position of the centre C of each preferred character location can be determined and the segmentation points S between adjacent preferred character locations can also be determined by the method described

above with reference to Figure 3.

If the pitch of the characters is known but the centres PC of the profile segments of the characters are still considered to be only estimated positions of the centres C of the preferred character locations, then the procedure described above with reference to Figure 4 can still be used. However, in this situation the solution to the least squares criteria reduces to minimising the sum of the squares with respect to only one variable d, the intercept of the line L3 with the X-axis.

Another method of determining character pitch is disclosed in IBM Technical Disclosure Bulletin, Vol. 14, No. 10, March 1972.

The segmentation points S determined by the, methods described above with reference to Figures 3 and 4 may be verified or adjusted by other techniques or empirically developed rules. For instance, the coincidence of a space between characters and a determined segmentation point suggests that the determined segmentation point is a natural segmentation point. However, if a determined segmentation point does not coincide with a space between characters, the determined segmentation point may be adjusted in either direction a predetermined distance to see if a space between characters is within the predetermined distance. This facilitates the recognition of characters that are overlapped, connected or broken. If the adjusted segmentation point results in a recognition failure, the original segmentation points may be used for a recognition retry.

The segmentation methods described above provide solutions for unusual but not uncommon recognition requirements, such as the detection of character blanks, the segmentation of underscored characters, and the deletion of noise, A character blank will have a profile segment of all logical 0's, and can be recognised directly from the horizontal line profile, bypassing further processing. Overlapped characters may be segmented by generating a profile segment based only on a certain portion of each set of character data signals, e.g. the portion representing the lower, central, or upper part of the character. Ideally, the omitted portion of the character data signals will be that portion representing the overlap. Underscored characters can be segmented by generating a profile segment based only on the upper portion of the character which does not include the underscore. Noise can be deleted by establishing minimum requirements for the profile segment and adjusting the segmentation points accordingly.

In the drawings and specification there has been set forth an exemplary embodiment of the invention. It should be understood that while specific terms are used, they are employed in a generic and descriptive sense only and not for purposes of limitation.

The details of the apparatus for implementing the invention have not been given because it is considered that a person skilled in the art would be able to use well known components for the various parts of the apparatus. For example, a suitably programmed microprocessor can be used to process the data signals representing the scanned characters in order to generate the profile segments, to determine the position of the centre of each profile segment, to establish the linear function and to analyse the linear function in order to establish the positions of the centres of the preferred character locations and the segmentation points.

## Claims

**1.** Apparatus for segmenting into individual character images a coded representation of a line of characters (12) printed on a document (11) comprising:

a scanner (10) for scanning along said line of characters (12) and for generating data signals representing images of said characters,

a profile generator responsive to said data signals for generating a line profile segment (23) for each character scanned, each profile segment extending in a line parallel to the direction of scanning and representing the size of a respective character in said direction of scanning,

position determining means for determining the position of the centre of each of said profile segments,

a linear function generator for generating a linear function dependent upon the position of the centre of at least one of said profile segments,

and analysing means for utilising said linear function to establish in said data signals segmentation points (S) defining boundaries between adjacent character images,

characterised in that

said linear function generator generates a linear function which can be represented on a graph having an X-axis and a Y-axis by a straight line having an equation:

$$c_i = ey_i + d$$

where

$c_i$ = distance along the X-axis of the centre of the ith preferred character location,

e = slope of the line corresponding to the pitch of the characters,

$y_i$ = distance along the Y-axis of the representation of the ith preferred character location, and

d = distance along the X-axis of the intercept of the line with the X-axis,

by utilising a least squares regression technique involving the establishment of the minimum value of the expression:

$$\sum_{i=1}^{m} \left[ x_i - (ey_i + d) \right]^2$$

where

m = total number of characters for which profile segments have been generated,

$x_i$ = distance along the X-axis of the centre of the profile segment of the ith character, and e, y and d have the values defined above,

by suitably selecting the values of d and e,

and in that said analysing means utilises said linear function to establish the positions of the centres of the preferred character locations and utilises said positions of the centres of preferred character locations to establish the positions of segmentation points.

**2.** Apparatus as claimed in claim 1 characterised in that

said scanner comprises means for scanning along said line of characters in a plurality of parallel scan lines and for generating for each scan line a set of data signals,

and in that said profile generator comprises means for logically combining corresponding portions of said sets of data signals in order to generate said profile segments.

**3.** A method of segmenting into individual character images a coded representation of a line of characters printed on a document comprising

scanning along said line of characters and generating data signals representing images of said characters,

generating from said data signals a line profile segment for each character scanned, each profile segment extending in a line parallel to the direction of scanning and representing the size of a respective character in said direction of scanning,

determining the position of the centre of each of said profile segments,

generating a linear function dependent upon the position of the centre of at least one of said profile segments,

and utilising said linear function to establish in said data signals segmentation points defining the boundaries between adjacent character images,

characterised by

generating a linear function which can be represented on a graph having an X-axis and a Y-axis by a straight line having an equation:

$c_i = ey_i + d$

where

$c_i$ = distance along the X-axis of the centre of the ith preferred character location,

e = slope of the line corresponding to the pitch of the characters,

$y_i$ = distance along the Y-axis of the representation of the ith preferred character location, and

d = distance along the X-axis of the intercept of the line with the X-axis,

by utilising a least squares regression technique involving the establishment of the minimum value of the expression:

$$\sum_{i=1}^{m} \left[ x_i - (ey_i + d) \right]^2$$

where

m = total number of characters for which profile segments have been generated,

$x_i$ = distance along the X-axis of the centre of the profile segment of the ith character,

and e, y and d have the values defined above,

by suitably selecting the values of d and e,

and utilising said linear function to establish the positions of the centres of the preferred character locations and utilising said positions of the centres of preferred character locations to establish the positions of segmentation points.

## Revendications

**1.** Dispositif pour segmenter en images de caractères individuels une représentation codée d'une ligne de caractères (12) imprimée sur un document (11) comprenant :

un lecteur optique (10) pour balayer suivant ladite ligne de caractères (12) et pour produire des signaux de données représentant les images desdits caractères,

un générateur de contour sensible auxdits signaux de données pour produire un segment de contour de ligne (23) pour chaque caractère balayé, chaque segment de contour s'étendant en une ligne parallèle au sens du balayage et représentant la taille d'un caractère respectif dans ledit sens du balayage,

un moyen de détermination de position pour déterminer la position du centre de chacun desdits segments de contour,

un générateur de fonction linéaire pour produire une fonction linéaire fonction de la position du centre d'au moins un desdits segments de contour,

et un moyen d'analyse pour utiliser ladite fonction linéaire pour établir dans les signaux de données les points de segmentation (S) définissant des limites entre des images de caractères contigues,

caractérisé en ce que

ledit générateur de fonction linéaire produit une fonction linéaire qui peut être représentée sur le graphique, comportant un axe X et un axe Y, par une ligne droite ayant une équation :

$$c_i = ey_i + d$$

où

$c_i$ = distance suivant l'axe X du centre du $i^{ième}$ emplacement du caractère préféré

e = pente de la ligne correspondant au pas des caractères,

$y_i$ = distance suivant l'axe Y de la représentation du $i^{ième}$ emplacement de caractère préféré, et

d = distance suivant l'axe X de l'intersection de la ligne avec l'axe X,

par l'utilisation d'une technique de régression par les plus petits carrés impliquant l'établissement de la valeur minimale de l'expression :

$$\sum_{i=1}^{m} \left[ x_i - (ey_i + d) \right]^2$$

où

m = nombre total de caractères pour lesquels les segments de contour ont été produits,

$x_i$ = distance suivant l'axe X du centre du segment de contour du $i^{ième}$ caractère et e, y et d ont les valeurs définies ci-dessus,

et par la sélection de manière appropriée des valeurs de d et e,

et en ce que ledit moyen d'analyse utilise ladite fonction linéaire pour établir les positions des centres des emplacements de caractères préférés et utilise lesdites positions des centres des emplacements des caractères préférés pour établir les positions des points de segmentation.

**2.** Dispositif selon la revendication 1, caractérisé en ce que

ledit lecteur optique comprend un moyen pour balayer suivant ladite ligne de caractères en une pluralité de lignes de balayage parallèle et pour produire pour chaque ligne de balayage un ensemble de signaux de données,

et en ce que le générateur de contour comprend un moyen pour combiner logiquement des parties correspondantes desdits ensembles de signaux de données afin de produire lesdits segments de contour.

**3.** Procédé pour segmenter en images de caractères individuels une représentation codée d'une ligne de caractères imprimée sur un document comprenant les étapes consistant à

:

balayer suivant ladite ligne de caractères et produire des signaux de données représentant des images desdits caractères,

produire à partir desdits signaux de données un segment de contour de ligne pour chaque caractère balayé, chaque segment de contour s'étendant en une ligne parallèle au sens du balayage et représentant la taille d'un caractère respectif dans ledit sens du balayage,

déterminer la position du centre de chacun desdits segments de contour,

produire une fonction linéaire fonction de la position du centre d'au moins un desdits segments de contour,

et utiliser ladite fonction linéaire pour établir dans lesdits signaux de données des points de segmentation définissant les limites entre les images de caractère contigues,

caractérisé par l'étape consistant à

produire une fonction linéaire qui peut représenter sur un graphique, ayant un axe X et un axe Y, une ligne droite ayant une équation :

$$c_i = ey_i + d$$

où

- $c_i$ = distance suivant l'axe X du centre du $i^{ième}$ emplacement du caractère préféré
- e = pente de la ligne correspondant au pas des caractères,
- $y_i$ = distance suivant l'axe Y de la représentation du $i^{ième}$ emplacement de caractère préféré, et
- d = distance suivant l'axe X de l'intersection de la ligne avec l'axe X,

et utiliser une technique de régression par les plus petits carrés impliquant l'établissement de la valeur minimale de l'expression :

$$\sum_{i=1}^{m} \left[ x_i - (ey_i + d) \right]^2$$

où

- m = nombre total de caractères pour lesquels les segments de contour ont été produits,
- $x_i$ = distance suivant l'axe X du centre du segment de contour du $i^{ième}$ caractère,

et e, y et d ont les valeurs définies ci-dessus, et sélectionner de manière appropriée les valeurs de d et e,

et utiliser ladite fonction linéaire pour établir les positions des centres des emplacements de caractères préférés et utiliser lesdites positions des centres des emplacements de caractères préférés pour établir les positions des points de segmentation.

## Patentansprüche

1. Einrichtung zum Segmentieren einer codierten Darstellung einer Zeile von Zeichen (12), die auf einem Dokument (11) gedruckt sind, in einzelne Zeichenbilder, die folgendes aufweist:

einen Scanner (10) zum Abtasten entlang der Zeile von Zeichen (12) und zum Erzeugen von Datensignalen, die Bilder der Zeichen repräsentieren,

einen Schnittgenerator, der auf die Datensignale anspricht, um für jedes abgetastete Zeichen ein Schnittsegment (23) für eine Zeile zu erzeugen, wobei sich jedes Schnittsegment in einer zu der Abtastrichtung parallelen Zeile erstreckt und die Größe eines entsprechenden Zeichens in der Abtastrichtung repräsentiert,

Positionsbestimmungsmittel zum Bestimmen der Position des Zentrums jedes der Schnittsegmente,

einen Generator für lineare Funktionen zum Erzeugen einer linearen Funktion, die von der Position des Zentrums zumindest eines der Schnittsegmente abhängt,

und ein Analysemittel zum Verwenden der linearen Funktion, um Segmentierungsstellen (S), die Grenzen zwischen benachbarten Zeichenbildern definieren, in den Datensignalen festzulegen,

dadurch gekennzeichnet, daß

der Generator für lineare Funktionen eine lineare Funktion erzeugt, die durch eine gerade Linie in einem Diagramm mit einer X-Achse und mit einer Y-Achse repräsentiert werden kann, für die eine Gleichung:

$$c_i = ey_i + d$$

gilt, wo

$c_i$ = Distanz entlang der X-Achse für das Zentrum der i-ten bevorzugten Zeichenstelle,

e = Neigung der Linie, welche der Dichte der Zeichen entspricht,

$Y_i$ = Distanz entlang der Y-Achse für die Darstellung der i-ten bevorzugten Zeichenstelle und

d = Distanz entlang der X-Achse für den Abschnitt der Linie mit der X-Achse,

wobei eine Regressionsmethode der kleinsten Quadrate verwendet wird, welche das Festlegen des minimalen Wertes des folgenden Ausdrucks:

$$\sum_{i=1}^{m} [ x_i - (ey_i + d) ]^2$$

wo
m = Gesamtzahl von Zeichen, für die Schnittsegmente erzeugt wurden,

$x_i$ = Distanz entlang der X-Achse für das Zentrum des Schnittsegments des i-ten Zeichens und e, y und d die oben definierten Werte aufweisen,

durch geeignetes Auswählen der Werte von d und e einschließt,

und daß das Analysemittel die lineare Funktion verwendet, um die Positionen der Zentren der bevorzugten Zeichenstellen festzulegen und die Positionen der Zentren bevorzugter Zeichenstellen verwendet, um die Positionen der Segmentierungsstellen festzulegen.

**2.** Einrichtung nach Anspruch 1, dadurch gekennzeichnet, daß

der Scanner Mittel zum Abtasten entlang der Zeile von Zeichen aus einer Mehrzahl paralleler Abtastzeilen und zum Erzeugen eines Satzes von Datensignalen für jede Abtastzeile aufweist,

und daß der Schnittgenerator Mittel zum logischen Kombinieren entsprechener Teile der Sätze von Datensignalen aufweist, um die Schnittsegmente zu erzeugen.

**3.** Verfahren zum Segmentieren einer codierten Darstellung einer Zeile von Zeichen, die auf einem Dokument gedruckt sind in einzelne Zeichenbilder, das folgendes umfaßt:

Abtasten entlang der Zeile von Zeichen und Erzeugen von Datensignalen, die Bilder der Zeichen repräsentieren.

Erzeugen eines Schnittsegments für eine Zeile für jedes abgetastete Zeichen aus den Datensignalen, wobei sich jedes Schnittsegment in einer zu der Abtastrichtung parallelen Zeile erstreckt und die Größe eines entsprechenden Zeichens in der Abtastrichtung repräsentiert,

Bestimmen der Position des Zentrums jedes der Schnittsegmente,

Erzeugen einer linearen Funktion, die von der Position des Zentrums zumindest eines der Schnittsegmente abhängt,

und Verwenden der linearen Funktion, um Segmentierungsstellen, die Grenzen zwischen benachbarten Zeichenbildern definieren, in den Datensignalen festzulegen,

gekennzeichnet durch folgendes:

Erzeugen einer linearen Funktion die durch eine gerade Linie in einem Diagramm mit einer X-Achse und mit einer Y-Achse repräsentiert werden kann, für die eine Gleichung:

$c_i = ey_i + d$

gilt, wo
$c_i$ = Distanz entlang der X-Achse für das Zentrum der i-ten bevorzugten Zeichenstelle,

e = Neigung der Linie, welche der Dichte der Zeichen entspricht,

$y_i$ = Distanz entlang der Y-Achse für die Darstellung der i-ten bevorzugten Zeichenstelle und

d = Distanz entlang der X-Achse für den Abschnitt der Linie mit der X-Achse,

wobei eine Regressionsmethode der kleinsten Quadrate verwendet wird, welche das Festlegen des minimalen Wertes des folgenden Ausdrucks:

$$\sum_{i=1}^{m} [ x_i - (ey_i + d) ]^2$$

wo

m = Gesamtzahl von Zeichen, für die Schnittsegmente erzeugt wurden,

$X_i$ = Distanz entlang der X-Achse für das Zentrum des Schnittsegments des i-ten Zeichens und e, y und d die oben definierten Werte aufweisen,

durch geeignetes Auswählen der Werte von d und e einschließt,

und Verwenden der linearen Funktion um die Positionen der Zentren der bevorzugten Zeichenstellen festzulegen und Verwenden der Positionen der Zentren bevorzugter Zeichenstellen, um die Positionen der Segmentierungsstellen festzulegen.

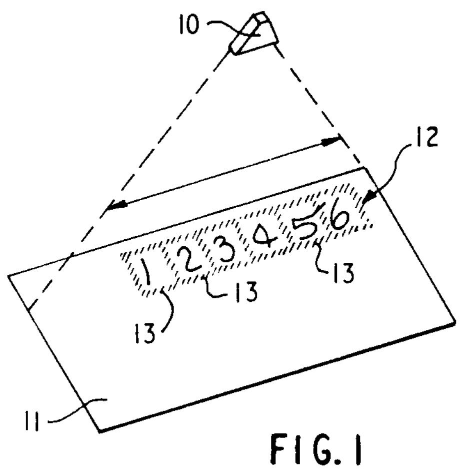


FIG. 1

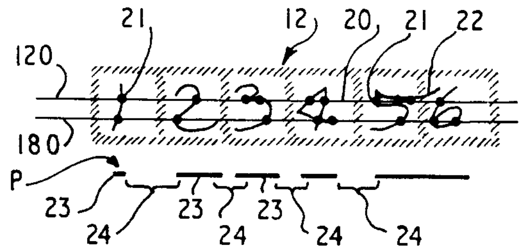


FIG. 2

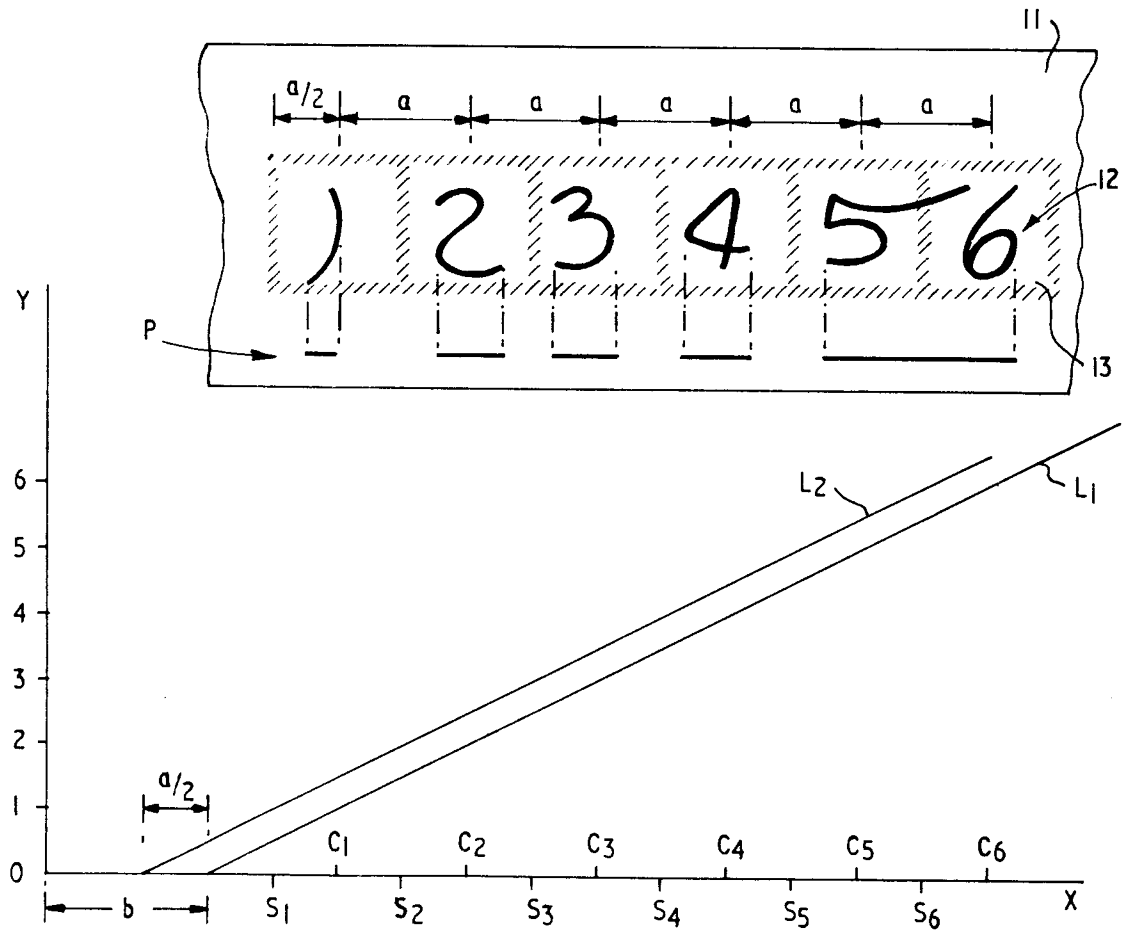


FIG 3

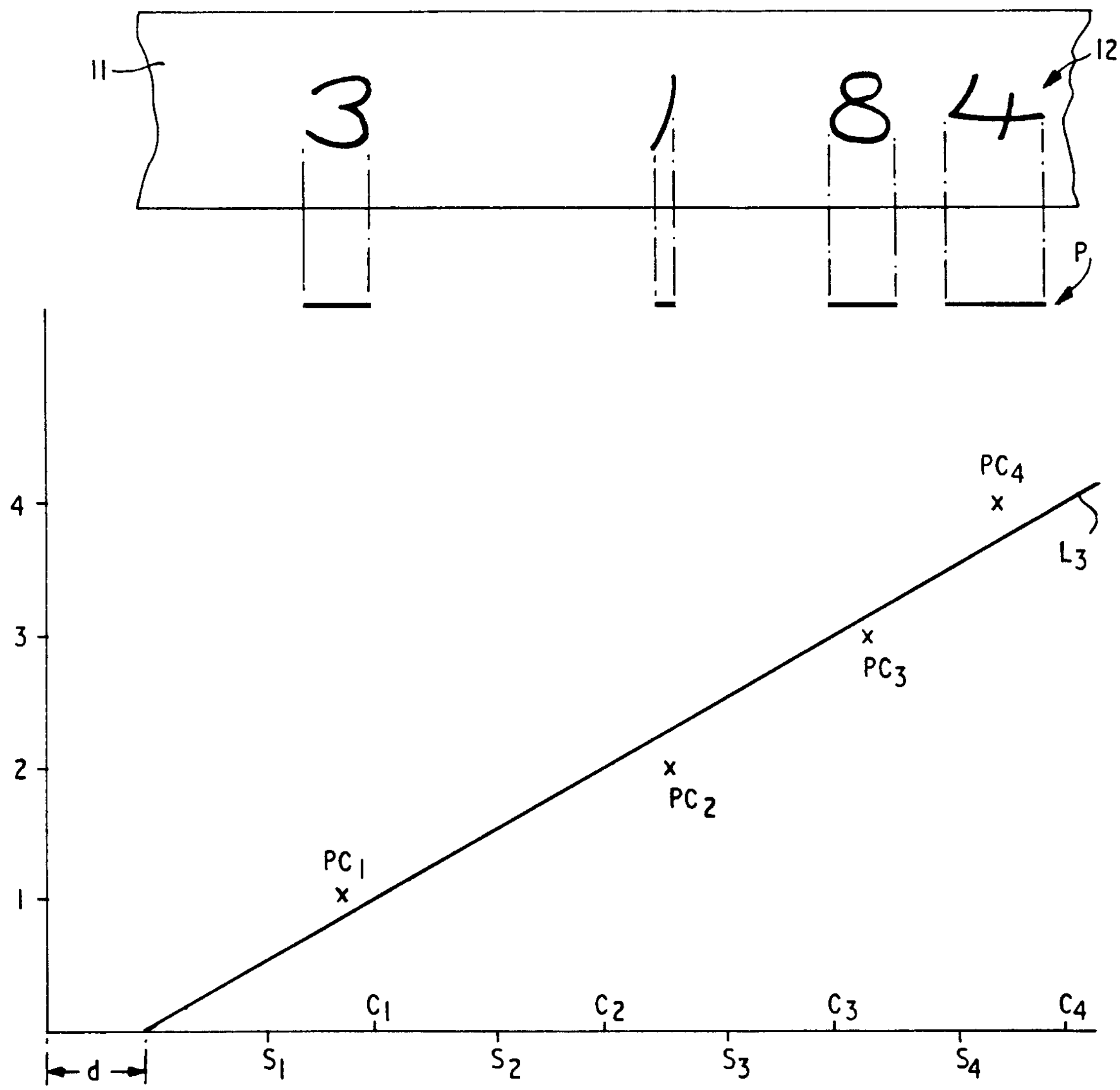


FIG. 4